# EUROPÄISCHE PATENTSCHRIFT

(11) **EP 1 396 671 B1**
(45) Veröffentlichungstag und Bekanntmachung des Hinweises auf die Patenterteilung: **15.03.2006**
(21) Anmeldenummer: 03019655.4
(22) Anmeldetag: 06.09.2003
(51) Int. Cl.: F16L 37/098

(54) **Aufnahmeteil einer Fluid-Steckkupplung**
Receiving part of a fluid plug-in coupling
Partie réceptrice d'un raccord fluide enfichable

(30) Priorität: 09.09.2002 DE 20213961 U
(43) Veröffentlichungstag der Anmeldung: 10.03.2004
(73) Patentinhaber: Voss Automotive GmbH, 51688 Wipperfürth (DE)
(72) Erfinder: Borgmeier, Olav Dipl.-Ing., 42499 Hückeswagen (DE); Zenses, Frank Dipl.-Ing., 50354 Hürth (DE); Sedaris, Jannis Dipl.-Ing., 51643 Gummersbach (DE)
(74) Vertreter: Patentanwälte Dr. Solf & Zapf

(56) Entgegenhaltungen:
- EP-A- 0 308 160
- GB-A- 2 174 163
- US-A- 2 327 611
- US-A- 4 979 765

## Beschreibung

Die vorliegende Erfindung betrifft ein Aufnahmeteil einer Fluid-Steckkupplung (wobei unter "Fluid" ein beliebiges, hydraulisches oder gasförmiges Strömungsmedium zu verstehen ist), bestehend aus einem Muffengehäuse mit einer Einstecköffnung für ein Steckerteil und mit einer Halteeinrichtung zum lösbaren Fixieren des eingesteckten Steckerteils, wobei die Halteeinrichtung ein in dem Muffengehäuse gelagertes Halteelement mit radial elastisch verformbaren Halteabschnitten zum rastenden Hintergreifen einer radialen Haltestufe des Steckerteils sowie ein über Rastmittel relativ zu dem Muffengehäuse axial verschiebbar gehaltertes Löseelement aufweist, wobei das Löseelement mit einem inneren Löseabschnitt in die Einstecköffnung eingreift und zum Lösen gegen die Halteabschnitte des Halteelementes wirkt.

Die EP 0 727 027 B1 beschreibt eine solche Schnellkupplung, bei der das Löseelement aus einer inneren Hülse und einer äußeren Hülse besteht. Die innere Hülse wirkt als Löseabschnitt gegen die Halteabschnitte des Halteelementes. Hierbei kann es unter bestimmten Betriebszuständen zu einem ungewollten Lösen des Steckerteils kommen, wodurch dann auch eine Leckage des jeweiligen Fluides auftritt.

Der vorliegenden Erfindung liegt die Aufgabe zugrunde, ein Aufnahmeteil der genannten Art zu schaffen, welches eine erhöhte Sicherheit gegen ungewolltes Lösen und Leckagen aufweist.

Erfindungsgemäß wird dies durch ein mit dem Muffen gehäuse verbundenes Sicherungselement erreicht wobei das Sicherungselement und das Löseelement relativ zueinander derart zwischen einer Sicherungsstellung und einer Freigabestellung bewegbar sind, dass das Löseelement in der Sicherungsstellung gegen eine Lösebewegung gesperrt und in der Freigabestellung für eine Lösebewegung freigegeben ist. Hierdurch ist ein ungewolltes Lösen ausgeschlossen. Vielmehr muß zum Lösen die Anordnung erst von der Sicherungsstellung in die Freigabestellung überführt werden, und erst dann kann das Löseelement axial gegen die Halteabschnitte des Halteelementes bewegt werden.

Zusätzlich dazu kann mit Vorteil ein integriertes Sperrventil vorgesehen sein, welches im entkuppelten Zustand selbsttätig schließt und durch Einstecken des Steckerteils selbsttätig geöffnet wird. Dadurch werden auch im entkuppelten Zustand Leckagen weitgehend vermieden.

Weitere vorteilhafte Ausgestaltungsmerkmale sind in den Unteransprüchen sowie der folgenden Beschreibung enthalten.

Anhand von in der Zeichnung veranschaulichten, bevorzugten Ausführungsbeispielen soll die Erfindung genauer erläutert werden. Dabei zeigen:
- Fig. 1: einen Halbschnitt (obere Hälfte) einer ersten Ausführungsform eines erfindungsgemäßen Aufnahmeteils mit eingestecktem und verriegeltem Steckerteil,
- Fig.2: einen Halbschnitt (korrespondierende untere Hälfte) des Aufnahmeteils in einer Lösestellung des Löseelementes zur Freigabe des Steckerteils,
- Fig. 3: einen Halbschnitt analog zu Fig. 2 mit etwas herausgezogenem Steckerteil,
- Fig. 4: eine Stimansicht des Aufnahmeteils (Ebene IV-IV gemäß Fig.1 und 2),
- Fig. 5: eine perspektivische Explosionsansicht bestimmter Einzelteile,
- Fig. 6: eine weitere Ansicht wie in Fig. 5 aus etwas anderer Blickrichtung,
- Fig. 7: eine Ansicht der montierten Einzelteile gemäß Fig. 5 und 6 in einer Sicherungsstellung,
- Fig. 8: die Anordnung nach Fig. 7 in einer Freigabestellung,
- Fig. 9: eine Ausführungsvariante des erfindungsgemäßen Aufnahmeteils in einem Längsschnitt analog zu Fig. 1 und 3, wobei in der oberen Figurenhälfte (Fig. 9a) die verriegelte Stellung und in der unteren Hälfte (Fig. 9b) die Lösestellung dargestellt sind,
- Fig. 10: eine Teil-Seitenansicht einer weiteren Ausführungsform der Steckkupplung in der Lösestellung,
- Fig.11: eine Stimansicht in Pfeilrichtung XI gemäß Fig. 10,
- Fig. 12 bis 14: Längsschnitte der Steckkupplung in der verriegelten Stellung, und zwar

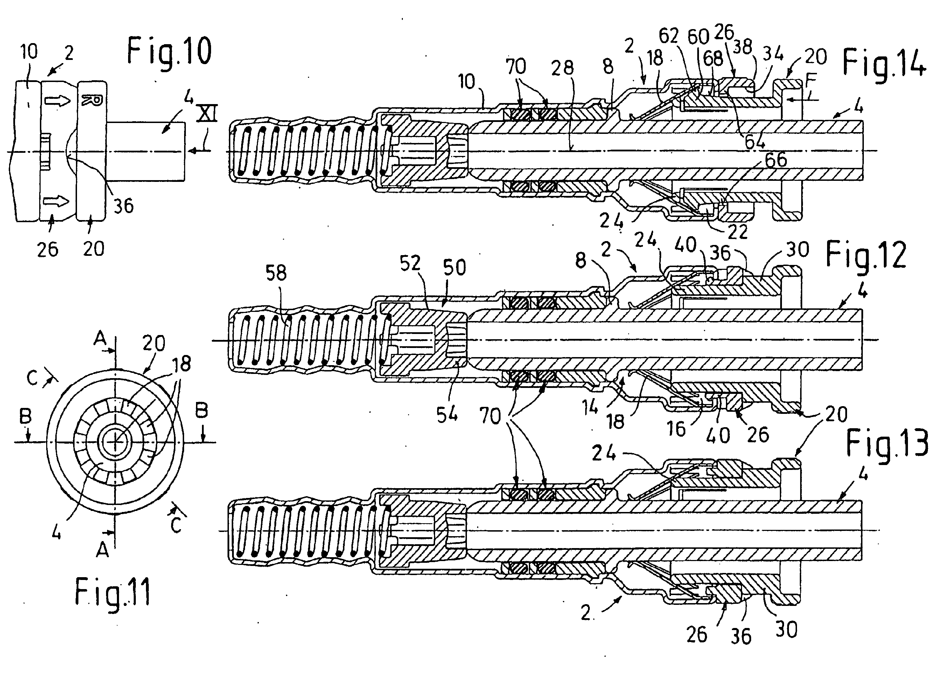

Fig. 12 in der Schnittebene A - A gemäß Fig. 11,
Fig. 13 in der Schnittebene B - B gemäß Fig. 11 und
Fig. 14 in der Schnittebene C - C gemäß Fig. 11.

In den verschiedenen Figuren der Zeichnungen sind gleiche Teile stets mit den gleichen Bezugszeichen versehen.

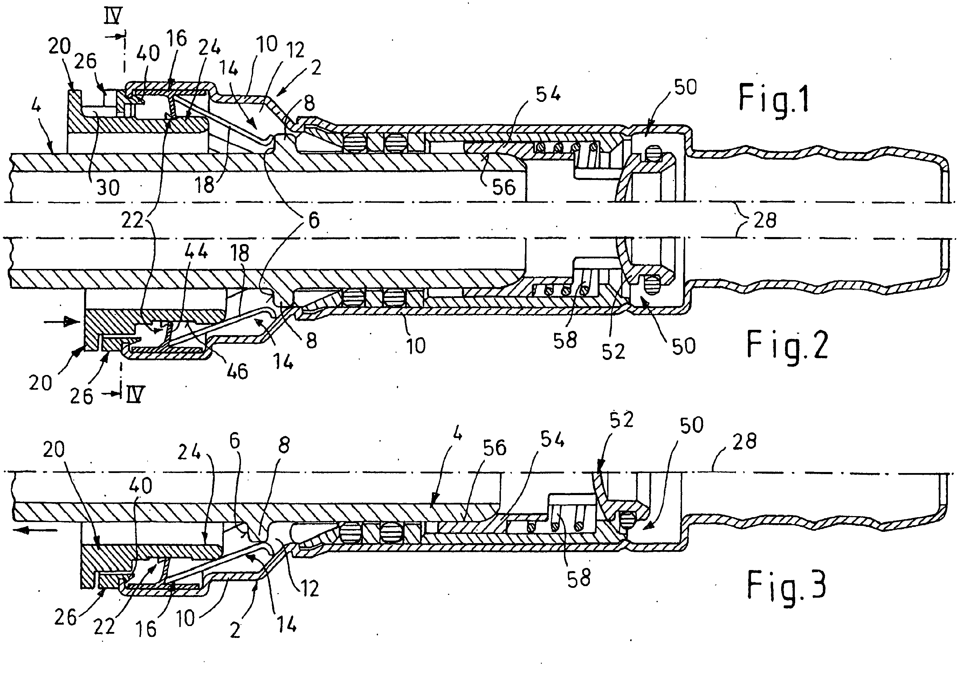

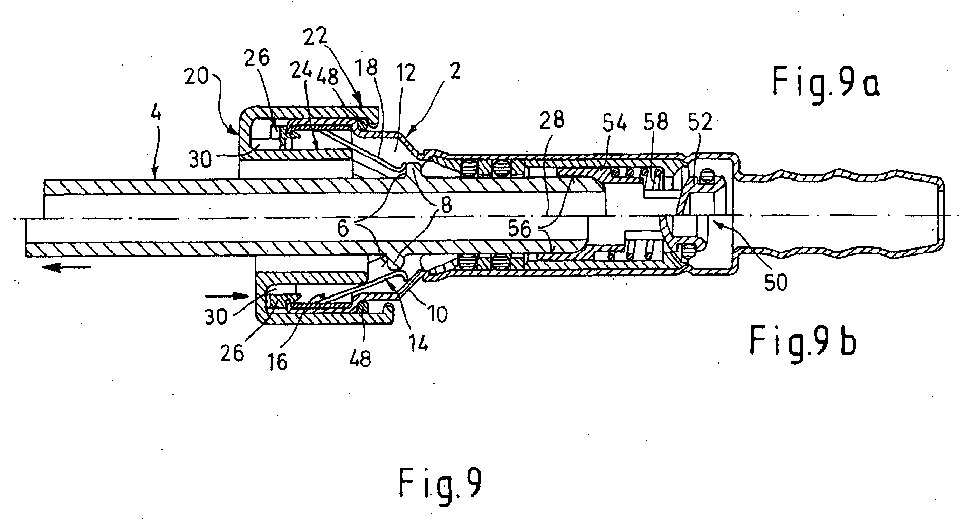

Wie sich zunächst aus Fig. 1 bis 3 und auch Fig. 9 sowie Fig. 12 bis 14 jeweils ergibt, besteht eine Steckkupplung aus einem Aufnahmeteil 2 und einem Steckerteil 4. Die Erfindung betrifft allerdings nur das Aufnahmeteil 2, während es sich bei dem Steckerteil 4 um eine normgemäße Ausführung (sog. SAE-Stecker) in Form eines Rohrstückes handelt, welches zur Bildung einer radialen Haltestufe 6 auf seinem Außenumfang einen Ringansatz 8 aufweist.

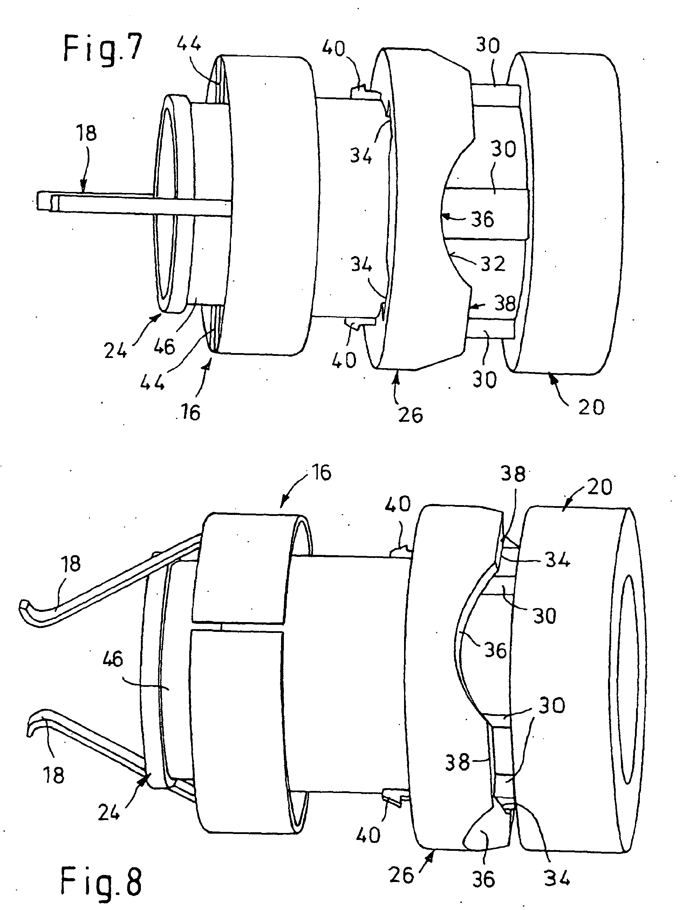

Das Aufnahmeteil 2 besteht aus einem Muffengehäuse 10 mit einer Einstecköffnung 12 für das Steckerteil 4 sowie mit einer Halteeinrichtung 14 zum lösbaren Fixieren des eingesteckten Steckerteils 4. Dazu weist die Halteeinrichtung 14 ein in dem Muffengehäuse 10 gelagertes Halteelement 16 auf, wobei dieses Halteelement seinerseits radial elastisch verformbare Halteabschnitte 18 zum rastenden Hintergreifen der Haltestufe 6 des Steckerteils 4 besitzt. Bevorzugt sind mehrere, z. B. acht radialsymmetrische Halteabschnitte 18 vorgesehen (siehe Fig. 11), von denen allerdings in Fig. 5 bis 8 jeweils nur zwei dargestellt sind. Das Aufnahmeteil 2 weist weiterhin ein Löseelement 20 auf, welches über Rastmittel 22 relativ zu dem Muffengehäuse 10 axial verschiebbar gehaltert ist Dabei greift das Löseelement 20 mit einem inneren Löseabschnitt 24 in die Einstecköffnung 12 ein und wirkt hier zum Lösen des arretierten Steckerteils 4 so gegen die Halteabschnitte 18 des Halteelementes 16, dass diese zur Freigabe des Steckerteils 4 radial gespreizt werden können.

Erfindungsgemäß weist das Aufnahmeteil 2 ein mit dem Muffengehäuse verbundenes Sicherungselement 26 auf, wobei dieses Sicherungselement 26 und das Löseelement 20 relativ zueinander derart zwischen einer Sicherungsstellung und einer Freigabestellung bewegbar sind, dass das Löseelement 20 in der Sicherungsstellung (Fig. 1, 7, 9a und 12-14) gegen eine axiale Lösebewegung gesperrt und in der Freigabestellung (Fig. 2, 3, 8, 9b und 10) für eine Lösebewegung freigegeben ist. Vorzugsweise sind das Sicherungselement 26 und das Löseelement 20 relativ zueinander zwischen der Sicherungsstellung und der Freigabestellung um die Kupplungsachse 28 verdrehbar. Dabei sind einerseits der Löseabschnitt 24 des Löseelementes 20 als hohlzylindrische Innenhülse und andererseits das Sicherungselement 26 als die Innenhülse koaxial umschließender und axial vor der Stirnseite des Muffengehäuses 10 angeordneter Ring (bzw. Ringscheibe) ausgebildet.

Wie am besten in den Detailansichten Fig. 5 bis 8 erkennbar ist, weist das Löseelement 20 auf dem Außenumfang des Löseabschnittes 24 mindestens einen radialen Sicherungsansatz 30 auf. Bei der dargestellten Ausführung sind vier radialsymmetrische Sicherungsansätze 30 vorgesehen. Jeder Sicherungsansatz 30 liegt in der Sicherungsstellung auf einer Stimfläche 32 des Sicherungselementes 26 auf, ist aber in der relativ verdrehten Freigabestellung axial durch eine korrespondierende radiale Ausnehmung 34 des Sicherungselementes 26 führbar. Hierbei ist es weiterhin vorteilhaft, wenn die Stimfläche 32 des Sicherungselementes 26 in Drehrichtung eine wellenartige Kontur derart aufweist, das jeweils im Bereich eines axial vertieften Wellentales 36 ein Anlagebereich für den zugehörigen Sicherungsansatz 30 (in der Sicherungsstellung) und im Bereich eines axial erhöhten Wellenberges 38 die axiale Ausnehmung zum Durchführen des Sicherungsansatzes 30 (in der Freigabestellung) gebildet sind.

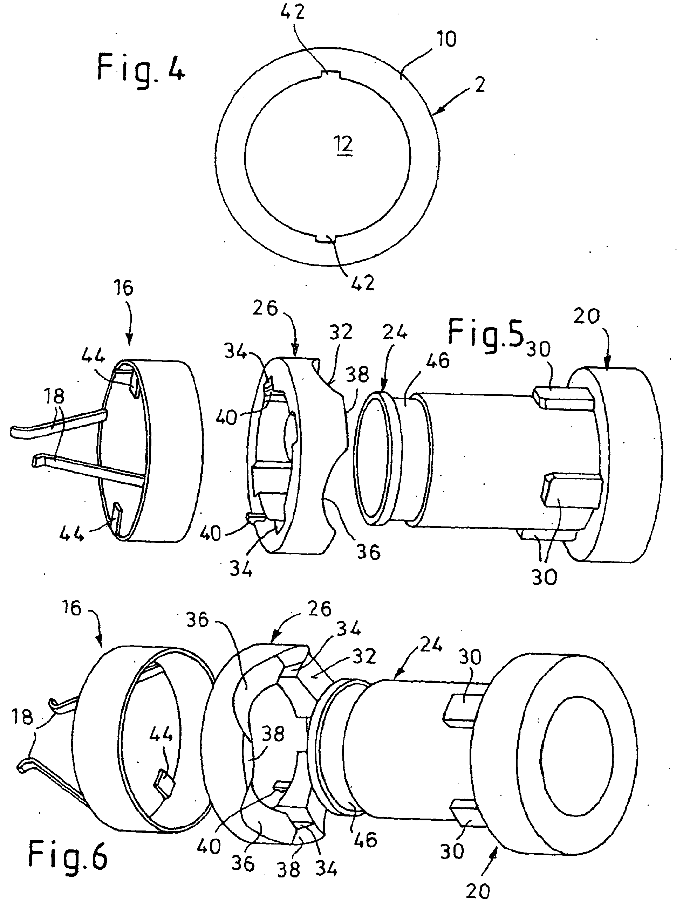

Bevorzugt ist dabei das Sicherungselement 26 gegen Verdrehen gesichert mit dem Muffengehäuse 10 verbunden, insbesondere verrastet. Dazu weist das Sicherungselement 26 bevorzugt mindestens zwei axiale Rastarme 40 auf, die in das Muffengehäuse 10 eingreifen und eine Kante hintergreifen. Gemäß Fig. 4 weist das Muffengehäuse 10 stimseitig Ausnehmungen 42 für die Rastarme 40 auf.

Das Löseelement 20 ist vorzugsweise mittelbar in dem Muffengehäuse 10 gehaltert, und zwar in der Ausführung nach Fig. 1 bis 8 über das Halteelement 16. Dazu weist das Halteelement 16 mindestens einen, wie dargestellt zwei, radiale Haltearme 44 auf, die in eine am Außenumfang der Innenhülse 24 gebildete Haltenut 46 eingreifen. Dabei ist die Haltenut 46 in axialer Richtung derart weit bemessen, dass sie die axiale Lösebewegung des Löseelementes 20 trotz der eingreifenden Haltearme 44 ermöglicht.

Erfindungsgemäß weist das Aufnahmeteil 2 weiterhin ein integriertes Sperrventil 50 auf, welches den Fluid-Durchgang im entkuppelten Zustand selbsttätig schließt und durch Einstecken des Steckerteils 4 öffnet. Das Sperrventil 50 weist ein axial bewegliches Ventilelement 52 gemäß Fig. 1 bis 3 und 9 mit einem Anlageabschnitt 54 für das Steckerteil 4 auf. Dieser Anlageabschnitt 54 ist gemäß Fig. 1 bis 3 und 9 zur Führung des Steckerteils 4 innerhalb des Muffengehäuses 10 verschiebbar geführt. Dazu ist der Anlageabschnitt 54 bevorzugt im Wesentlichen hohlzylindrisch ausgebildet und weist eine erweitere Aufnahme 56 für einen freien Endbereich des Steckerteils 4 auf. Dadurch ist der freie Endbereich des Steckerteils 4 in seinem in die Aufnahme 56 relativ spielarm eingeführten Zustand über den Anlageabschnitt 54 innerhalb des Muffengehäuses 10 geführt. Das Sperrventil 50 ist in Schließrichtung durch eine Ventilfeder 58 vorgespannt.

Es sollen noch einige Ausführungsvarianten erläutert werden.

Bei der Ausführung gemäß Fig. 9 ist das Löseelement 20 außen am äußeren Umfang des Muffengehäuses 10 verrastet.

Bei der in den Fig. 10 bis 14 veranschaulichten Ausführungsform ist das Löseelement 20 mittelbar über das Sicherungselement 26 gehaltert. Dazu weist das Löseelement 20 mindestens zwei sich axial erstreckende, diametral gegenüberliegende und in radialer Richtung federelastisch bewegliche Haltearme 60 auf, die an ihren vorderen, in das Aufnahmeteil 2 ragenden Enden radial nach außen gerichtete Rastnasen 62 aufweisen. Hierzu wird insbesondere auf Fig. 14 hingewiesen. Das Sicherungselement 26 besitzt einen radial nach innen weisenden Ringbund 64 mit einer inneren Anlagefläche 66. Das Löseelement 20 ist mit den Rastnasen 62 der Haltearme 60 durch den Ringbund 64 hindurch einrastbar, wobei die Rastnasen 62 auch zur Sicherung des Löseelementes 20 gegen Herausziehen durch Anlage an dem Ringbund 64 dienen. Zusätzlich ist vorteilhafterweise vorgesehen, dass das Löseelement 20 mit einer axial in Lösebetätigungsrichtung wirkenden Federkraft F beaufschlagt ist (siehe Fig. 14). Bei der dargestellten Ausführung wird dies dadurch erreicht, dass die federelastischen Haltearme 60 äußere, konusartige Schrägflächen 68 aufweisen, die zum Erzeugen die Federkraft F radial mit der inneren Anlagefläche 66 des Ringbundes 64 des Sicherungselementes 26 zusammenwirken. Durch diese vorteilhafte Ausgestaltung wird das Löseelement 20 durch die Federkraft F stets in das Aufnahmeteil 2 hineingezogen, so dass die Sicherungsansätze 30 stets in den Wellentälem 36 gehalten werden und nur gegen die Federkraft F in den Bereich der Wellenberge 38 überführt werden können.

Bei dieser Ausführung gemäß Fig. 10 bis 14 ist weiterhin vorgesehen, dass das Ventilelement 52 des Sperrventils 50 in seiner nicht dargestellten Schließstellung mit einer Dichtungsanordnung 70 - in diesem Beispiel gebildet durch zwei axial beabstandete Dichtringe - zusammenwirkt, die auch zum Abdichten des eingesteckten Steckerteils 4 entsprechend der zeichnerischen Darstellung vorgesehen ist.

Alternativ kann das Löseelement 20 auch mit dem Halteelement 16 verdrehsicher verbunden, insbesondere verrastet sein.

Die stimseitige Kontur des Sicherungselementes 26 mit den Ausnehmungen 34 kann auch direkt (einstückig) am Muffengehäuse 10 ausgebildet sein, so dass das Muffengehäuse 10 gleichzeitig die Funktion des Sicherungselementes 26 hat.

Das Halteelement 16 kann zusätzliche Rastmittel zur axial fedemden Befestigung des Löseelementes 20 aufweisen. Zudem kann das Halteelement 16 zusätzliche Federarme aufweisen, die eine Dichtungsabschlußbuchse zusätzlich halten (nicht dargestellt).

Mit Vorteil ist eine Schmutzdichtung 48 vorgesehen, die durch eine dünne Gummischeibe gebildet sein kann, die zwischen dem Muffengehäuse 10 und dem Sicherungselement 26 eingelegt wird und sich innen der Kontur des Steckerteils 4 anpasst. Bei der Ausführung nach Fig. 9 kann ein solches Dichtungselement 48 auch im Freiraum zwischen der Innenhülse 24 und den äußeren Rastmitteln 22 des Löseelementes 20 axial vor der Stirnseite des Muffengehäuses 10 angeordnet sein. Dieses Dichtungselement 48 muß allerdings den Einbauraum für das Sicherungselement 26 berücksichtigen. Weiterhin kann auch eine radiale Dichtlippe unmittelbar am Löseelement derart angeordnet sein, dass diese sich radial nach innen erstreckt und auf dem Umfang des Steckerteils 4 zur Auflage gelangt.

Das erfindungsgemäße Aufnahmeteil 2 kann wie folgt bedient werden.

### a) Einhandbedienung

Bei der Einhandbedienung muß entweder das Sicherungselement 26 oder das Löseelement 20 gegenüber dem Muffengehäuse 10 verdrehsicher fixiert sein. Durch Drehen des Löseelementes oder des Sicherungselementes gelangen die Sicherungsansätze 30 aus der stabilen Gleichgewichtslage (Wellental) in eine Position; in der die Sicherungsansätze 30 im Bereich der Wellenberge mit den Ausnehmungen 34 fluchten und so axial hindurchgeführt werden können.

### b) Zweihandbedienung

Hierbei sind weder das Sicherungselement 26 noch das Löseelement 20 gegenüber dem Muffengehäuse 10 verdrehsicher fixiert. Daher müssen beim relativen Verdrehen beide Elemente manuell festgehalten bzw. bewegt werden.

Eine Kontrolle der Verriegelung ist möglich durch
a) Abstand zwischen Löseelement 20 und Sicherungselement 26
b) Optische Merkmale (z. B. farbige Kennzeichnung) an den Sicherungsansätzen 30 und/oder der Innenhülse 24 des Löseelementes 20.

## Patentansprüche

1. Aufnahmeteil (2) einer Fluid-Steckkupplung, bestehend aus einem Muffengehäuse (10) mit einer Einstecköffnung (12) für ein Steckerteil (4) und mit einer Halteeinrichtung (14) zum lösbaren Fixieren des eingesteckten Steckerteils (4), wobei die Halteeinrichtung (14) ein in dem Muffengehäuse (10) gelagertes Halteelement (16) mit radial elastisch verformbaren Halteabschnitten (18) zum rastenden Hintergreifen einer radialen Haltestufe (6) des Steckerteils (4) sowie ein über Rastmittel (22) relativ zu dem Muffengehäuse (10) axial verschiebbar gehaltertes Löseelement (20) aufweist, wobei das Löseelement (20) mit einem inneren Löseabschnitt (24) in die Einstecköffnung (12) eingreift und zum Lösen gegen die Halteabschnitte (18) des Halteelementes (16) wirkt, **gekennzeichnet durch** ein mit dem Muffengehäuse (10) verbundenes Sicherungselement (26), wobei das Sicherungselement (26) und das Löseelement (20) relativ zueinander derart zwischen einer Sicherungsstellung und einer Freigabestellung bewegbar sind, dass das Löseelement (20) in der Sicherungsstellung gegen eine Lösebewegung gesperrt und in der Freigabestellung für eine Lösebewegung freigegeben ist.

2. Aufnahmeteil nach Anspruch 1,
**dadurch gekennzeichnet, dass** das Sicherungselement (26) und das Löseelement (20) relativ zueinander um die Kupplungsachse (28) verdrehbar sind.

3. Aufnahmeteil nach Anspruch 1 oder 2,
**dadurch gekennzeichnet, dass** der Löseabschnitt (24) des Löseelementes (20) als hohlzylindrische Innenhülse und das Sicherungselement (26) als die Innenhülse koaxial umschließender Ring ausgebildet sind.

4. Aufnahmeteil nach einem der Ansprüche 1 bis 3,
**dadurch gekennzeichnet, dass** das Löseelement(20) mindestens einen Sicherungsansatz (30) aufweist, der in der Sicherungsstellung auf einer Stimfläche (32) des Sicherungselementes (26) aufliegt und in der Freigabestellung axial durch eine korrespondierende Ausnehmung (34) des Sicherungselementes (26) führbar ist.

5. Aufnahmeteil nach Anspruch 4,
**dadurch gekennzeichnet, dass** die Stimfläche (32) des Sicherungselementes (26) in Drehrichtung eine wellenartige Kontur derart aufweist, dass jeweils im Bereich eines axial vertieften Wellentales (36) ein Anlagebereich für den Sicherungsansatz (30) und im Bereich eines axial erhöhten Wellenberges (38) die Ausnehmung zum Durchführen des Sicherungsansatzes (30) gebildet sind.

6. Aufnahmeteil nach einem der Ansprüche 1 bis 5,
**dadurch gekennzeichnet, dass** das Sicherungselement (26) mit dem Muffengehäuse (10) verdrehfest verbunden, bevorzugt verrastet ist.

7. Aufnahmeteil nach einem der Ansprüche 1 bis 6,
**dadurch gekennzeichnet, dass** dasLöseelement(20)mittelbar über das Halteelement (16) und/oder über das Sicherungselement (26) in dem Muffengehäuse (10) gehaltert ist.

8. Aufnahmeteil nach Anspruch 7,
**dadurch gekennzeichnet, dass** das Halteelement (16) mindestens einen radialen Haltearm (44) aufweist, der in eine am Außenumfang der Innenhülse (24) gebildete Haltenut (46) eingreift.

9. Aufnahmeteil nach einem der Ansprüche 1 bis 7,
**dadurch gekennzeichnet, dass** das Löseelement (20) mit einer axial in Lösebetätigungsrichtung wirkenden Federkraft (F) beaufschlagt ist.

10. Aufnahmeteil nach Anspruch 9,
**dadurch gekennzeichnet, dass** dasLöseelement(20) mindestens zwei axiale, in radialer Richtung federelastische Haltearme (60) aufweist, die mit äußeren, konusartigen Schrägfächen (68) zum Erzeugen der axialen Federkraft (F) radial mit einer inneren Anlagefläche (66) des Sicherungselementes (26) zusammenwirken.

11. Aufnahmeteil nach Anspruch 10,
**dadurch gekennzeichnte, dass** dieAnlagefläche(66)Teileines radial nach innen weisenden Ringbundes (64) des Sicherungselementes (26) ist, wobei vorzugsweise die Haltearme (60) des Löseelementes (20) endseitige Rastnasen (62) zur Sicherung des Löseelementes (20) gegen Herausziehen durch Anlage an dem Ringbund (64) aufweisen.

12. Aufnahmeteil nach einem der Ansprüche 1 bis 11,
**gekennzeichnet durch** ein integriertes Sperrventil (50), welches im entkuppelten Zustand selbsttätig schließt und **durch** Einstecken des Steckerteils (4) geöffnet wird.

13. Aufnahmeteil nach Anspruch 12,
**dadurch gekennzeichnet, dass** das Sperrventil (50) ein bewegliches Ventilelement (52) mit einem Anlageabschnitt (54) für das Steckerteil (4) aufweist.

14. Aufnahmeteil nach Anspruch 13,
**dadurch gekennzeichnet, dass** derAnlageabschnitt (54) zur Führung des Steckerteils (4) innerhalb des Muffengehäuses (10) ausgebildet und geführt ist.

15. Aufnahmeteil nach Anspruch13 oder 14,
**dadurch gekennzeichnet, dass** derAnlageabschnitt (54) im Wesentlichen hohlzylindrisch ausgebildet ist und eine erweitere Aufnahme (56) für einen freien Endbereich des Steckerteils (4) aufweist.

16. Aufnahmeteil nach Anspruch 13,
**dadurch gekennzeichnet, dass** das Ventilelement (52) in seiner Schließstellung mit einer Dichtungsanordnung (70) zusammenwirkt, die auch zum Abdichten des eingesteckten Steckerteils (4) vorgesehen ist.

## Revendications

1. Partie réceptrice (2) d'un raccord fluide enfichable, comprenant un boîtier de manchon (10) avec une ouverture d'emboîtement (12) pour une partie de fiche (4) et avec un dispositif de retenue (14) pour la fixation amovible de la partie de fiche (4) emboîtée, le dispositif de retenue (14) présentant un élément de retenue (16) logé dans le boîtier de manchon (10) avec des parties de retenue (18) déformables élastiquement radialement pour l'engagement par l'arrière par encliquetage d'un niveau de retenue (6) radial de la partie de fiche (4) et un élément de desserrage (20) fixé par des moyens d'encliquetage (22) de façon coulissante axialement par rapport au boîtier de manchon (10), l'élément de desserrage (20) s'engageant avec une partie de desserrage (24) intérieure dans l'ouverture d'emboîtement (12) et agissant pour le desserrage contre les parties de retenue (18) de l'élément de retenue (16), **caractérisé par** un élément de blocage (26) relié au boîtier de manchon (10), l'élément de blocage (26) et l'élément de desserrage (20) pouvant être déplacés l'un par rapport l'autre entre une position de blocage et une position de libération de telle sorte que l'élément de desserrage (20) est serré dans la position de blocage contre un mouvement de desserrage et est libéré dans la position de libération pour un mouvement de desserrage.

2. Partie réceptrice selon la revendication 1,
**caractérisée en ce que** l'élément de blocage (26) et l'élément de desserrage (20) peuvent tourner l'un par rapport à l'autre autour de l'axe d'accouplement (28).

3. Partie réceptrice selon la revendication 1 ou 2,
**caractérisée en ce que** la partie de desserrage (24) de l'élément de desserrage (20) et l'élément de blocage (26) sont conçus respectivement comme douille intérieure cylindrique creuse et comme bague entourant la douille intérieure sur le même axe.

4. Partie réceptrice selon l'une quelconque des revendications 1 à 3,
**caractérisée en ce que** l'élément de desserrage (20) présente au moins une embase de blocage (30) qui repose dans la position de blocage sur une face avant (32) de l'élément de blocage (26) et peut être guidé dans la position de libération axialement à travers un évidement (34) correspondant de l'élément de blocage (26).

5. Partie réceptrice selon la revendication 4,
**caractérisée en ce que** la face avant (32) de l'élément de blocage (26) présente dans le sens de rotation un contour ondulé de telle sorte qu'une zone d'appui pour l'embase de blocage (30) et l'évidement pour le passage de l'embase de blocage (30) sont formés respectivement dans la zone d'un creux d'ondulation (36) creusé axialement et dans la zone d'un sommet d'élévation (38) élevé axialement.

6. Partie réceptrice selon l'une quelconque des revendications 1 à 5,
**caractérisée en ce que** l'élément de blocage (26) est relié, de préférence encliqueté, de façon solidaire en rotation avec le boîtier de manchon (10).

7. Partie réceptrice selon l'une quelconque des revendications 1 à 6,
**caractérisée en ce que** l'élément de desserrage (20) est fixé indirectement par l'élément de retenue (16) et/ou par l'élément de blocage (26) dans le boîtier de manchon (10).

8. Partie réceptrice selon la revendication 7,
**caractérisée en ce que** l'élément de retenue (16) présente au moins un bras de retenue (44) radial qui s'engage dans une rainure de retenue (46) formée sur le pourtour extérieur de la douille intérieure (24).

9. Partie réceptrice selon l'une quelconque des revendications 1 à 7,
**caractérisée en ce que** l'élément de desserrage (20) est sollicité avec une force de ressort (F) agissant axialement dans le sens d'actionnement de desserrage.

10. Partie réceptrice selon la revendication 9,
**caractérisée en ce que** l'élément de desserrage (20) présente au moins deux bras de retenue (60) axiaux, élastiques comme un ressort dans la direction radiale, qui coopèrent avec des surfaces inclinées (68) extérieures et coniques pour générer la force de ressort (F) axial radialement avec une surface d'appui (66) intérieure de l'élément de blocage (26).

11. Partie réceptrice selon la revendication 10,
**caractérisée en ce que** la surface d'appui (66) fait partie d'une collerette annulaire (64), dirigée radialement vers l'intérieur, de l'élément de blocage (26), les bras de retenue (60) de l'élément de desserrage (20) présentant de préférence des ergots d'arrêt (62) côté extrémité pour le blocage de l'élément de desserrage (20) contre l'extraction par appui sur la collerette annulaire (64).

12. Partie réceptrice selon l'une quelconque des revendications 1 à 11,
**caractérisée par** une vanne d'arrêt (50) intégrée, qui ferme automatiquement dans l'état désaccouplé et est ouverte par l'emboîtement de la partie à fiche (4).

13. Partie réceptrice selon la revendication 12,
**caractérisée en ce que** la vanne de blocage (50) présente un élément de vanne (52) mobile avec une partie d'appui (54) pour la partie à fiche (4).

14. Partie réceptrice selon la revendication 13,
**caractérisée en ce que** la partie d'appui (54) est réalisée et guidée pour le guidage de la partie à fiche (4) à l'intérieur du boîtier de manchon (10).

15. Partie réceptrice selon la revendication 13 ou 14,
**caractérisée en ce que** la partie d'appui (54) est réalisée sensiblement avec une forme cylindrique creuse et présente un logement (56) élargi pour une zone d'extrémité libre de la partie à fiche (4).

16. Partie réceptrice selon la revendication 13,
**caractérisée en ce que** l'élément de vanne (52) coopère dans sa position de fermeture avec un dispositif d'étanchéité (70) qui est prévu également pour l'étanchéité de la partie à fiche (4) emboîtée.

## Claims

1. A receiving part (2) of a fluid plug-in coupling, comprising a sleeve housing (10) with a plug-in opening (12) for a plug part (4) and with a retaining device (14) for fixing the inserted plug part (4) in a releasable manner, wherein the retaining device (14) has a retaining element (16), which is mounted in the sleeve housing (10) and which has retaining portions (18) deformable in a radially resilient manner for engaging behind a radial retaining step (6) of the plug part (4) so as to catch it, and a release element (20) held so as to be axially displaceable relative to the sleeve housing (10) by way of catch means (22), wherein the release element (20) engages ― with an internal release portion (24) - in the plug-in opening (12) and acts against the retaining portions (18) of the retaining element (16) for release purposes, **characterized by** a securing element (26) connected to the sleeve housing (10), wherein the securing element (26) and the release element (20) are movable relative to each other in such a way between a secured position and a release position that the release element (20) is locked in the secured position so as to prevent a release movement and is released in the release position for a release movement.

2. A receiving part according to Claim 1, **characterized in that** the securing element (26) and the release element (20) are capable of being rotated relative to each other about the coupling axis (28).

3. A receiving part according to Claim 1 or 2, **characterized in that** the release portion (24) of the release element (20) is constructed in the form of a hollow-cylindrical internal sleeve and the securing element (26) is constructed in the form of a ring which surrounds the internal sleeve coaxially.

4. A receiving part according to any one of Claims 1 to 3, **characterized in that** the release element (20) comprises at least one securing attachment (30) which rests on an end face (32) of the securing element (26) in the secured position and is capable of being guided axially through a corresponding recess (34) in the securing element (26) in the release position.

5. A receiving part according to Claim 4, **characterized in that** the end face (32) of the securing element (26) has a corrugated contour in the direction of rotation, in such a way that an abutment region for the securing attachment (30) is formed in the region of an axially recessed wave trough (36) and the recess for the passage of the securing attachment (30) is formed in the region of an axially raised wave crest (38) in each case.

6. A receiving part according to any one of Claims 1 to 5, **characterized in that** the securing element (26) is connected in a rotationally fixed manner, preferably by being locked, to the sleeve housing (10).

7. A receiving part according to any one of Claims 1 to 6, **characterized in that** the release element (20) is held in the sleeve housing (10) in an indirect manner by way of the retaining element (16) and/or by way of the securing element (26).

8. A receiving part according to Claim 7, **characterized in that** the retaining element (16) has at least one radial retaining arm (44) which engages in a retaining groove (46) formed on the external periphery of the internal sleeve (24).

9. A receiving part according to any one of Claims 1 to 7, **characterized in that** the release element (20) is acted upon by a spring force (F) acting axially in the direction of actuating the release.

10. A receiving part according to Claim 9, **characterized in that** the release element (20) has at least two axial retaining arms (60) which are resilient in the radial direction and which, with external cone-like sloping faces (68) for producing the axial spring force (F), co-operate radially with an internal abutment face (66) of the securing element (26).

11. A receiving part according to Claim 10, **characterized in that** the abutment face (66) is part of an annular collar (64) of the securing element (26) directed radially inwards, wherein the retaining arms (60) of the release element (20) preferably have catch projections (62) at the end in order to prevent the release element (20) from being pulled out by abutment against the annular collar (64).

12. A receiving part according to any one of Claims 1 to 11, **characterized by** an integrated shut-off valve (50) which closes automatically in the decoupled state and is opened by inserting the plug part (4).

13. A receiving part according to Claim 12, **characterized in that** the shut-off valve (50) has a movable valve element (52) with an abutment portion (54) for the plug part (4).

14. A receiving part according to Claim 13, **characterized in that** the abutment portion (54) is designed and guided in order to guide the plug part (4) inside the sleeve housing (10).

15. A receiving part according to Claim 13 or 14, **characterized in that** the abutment portion (54) is made substantially hollow-cylindrical and has an enlarged receiving means (56) for a free end region of the plug part (4).

16. A receiving part according to Claim 13, **characterized in that** the valve element (52) co-operates in its closed position with a sealing arrangement (70) which is also provided for sealing off the inserted plug part (4).
